# EUROPEAN PATENT APPLICATION

(11) **EP 4 475 059 A1**
(43) Date of publication of application: **11.12.2024**
(21) Application number: 24179850.3
(22) Date of filing: 04.06.2024
(51) Int. Cl.: G06Q 20/40, G06Q 20/34, H04L 9/08

(54) **SYSTEMS AND METHODS FOR DERIVING CARD VERIFICATION CODE**

(30) Priority: 09.06.2023 US 202318207967
(71) Applicant: Capital One Services, LLC, McLean, Virginia 22102 (US)
(72) Inventor: CHIGURUPATI, Srinivasa, McLean, 22102 (US)
(74) Representative: Boult Wade Tennant LLP

(57) **Abstract**

Systems and methods for deriving a card verification code (CVC) of a payment card are provided. An exemplary method includes, receiving, by a server, a request of issuing a payment card to a user, determining, by the server, a personal account number (PAN) and an expiry date of the payment card, and receiving, by the server, a social security number (SSN) and a zip code associated with the user. The exemplary method further includes generating, by the server, a dynamic service code based on the SSN and the zip code, generating, by the server, a bitmap based on the PAN, the expiry date, and the dynamic service code, and receiving, by the server, an encryption key. The exemplary method further includes generating, by the server, a CVC of the payment card based on the bitmap and the encryption key.

## Description

### FIELD OF THE INVENTION

The present disclosure relates generally to card verification, and more particularly, to systems and methods for deriving a card verification code.

### BACKGROUND

The use of payment cards (e.g., credit cards, debit cards, digital/virtual cards etc.) is a popular and widespread manner of completing a payment transaction to, for example, purchase products or services. While payment cards allow a convenient and quick way for consumers and businesses to process transactions, they also introduce security risks, such as the risk of comprised data, the risk of unauthorized use, and the risk of fraud.

Card verification codes (CVCs), also known as card verification values (CVVs), printed on payment cards can be used as a cryptographic integrity check on the content of a payment card during transaction authorization processes. Existing CVCs are generated and personalized by card issuers using the combination of the permanent account number (PAN) number, the card expiry date, the three digit service code, and the encryption security key. However, the three digit service code is normally a fixed service code, which is very easy to guess and is not very secure, and accordingly may not significantly improve the security of the CVC generation and transaction authorization process.

These and other deficiencies exist. Accordingly, there is a need to provide systems and methods that can derive or generate more secure CVCs.

### SUMMARY

Aspects of the disclosed technology include systems and methods for deriving a CVC of a payment card.

Embodiments of the present disclosure provide a system for deriving a card verification code (CVC) of a payment card. The system can include a server. The server is configured to: receive a request of issuing a payment card to a user; determine a personal account number (PAN) and an expiry date of the payment card; receive a social security number (SSN) and a zip code associated with the user; generate a dynamic service code based on the SSN and the zip code; generate a bitmap based on the PAN, the expiry date and the dynamic service code; receive an encryption key; and generate a CVC of the payment card based on the bitmap and the encryption key.

Embodiments of the present disclosure provide a method for deriving a card verification code (CVC) of a payment card. The method can include: receiving, by a server, a request of issuing a payment card to a user; determining, by the server, a personal account number (PAN) and an expiry date of the payment card; receiving, by the server, a social security number (SSN) and a zip code associated with the user; generating, by the server, a dynamic service code based on the SSN and the zip code; generating, by the server, a bitmap based on the PAN, the expiry date, and the dynamic service code; receiving, by the server, an encryption key; and generating, by the server, a CVC of the payment card based on the bitmap and the encryption key.

Embodiments of the present disclosure provide a non-transitory, computer-accessible medium that comprises instructions for deriving a card verification code (CVC) of a payment card that, when executed on a computer arrangement, causes the computer arrangement to perform actions including: receiving a request of issuing a payment card to a user; determining a personal account number (PAN) and an expiry date of the payment card; receiving a social security number (SSN) and a zip code associated with the user; generating a dynamic service code based on the SSN and the zip code; generating a bitmap based on the PAN, the expiry date and the dynamic service code; receiving an encryption key; and generating a CVC of the payment card based on the bitmap and the encryption key.

Further features of the disclosed systems and methods, and the advantages offered thereby, are explained in greater detail hereinafter with reference to specific example embodiments illustrated in the accompanying drawings.

### BRIEF DESCRIPTION OF THE DRAWINGS

Figure 1 is a diagram of a system for deriving a card verification code (CVC) of a payment card according to an example embodiment.
Figure 2 is a diagram illustrating interactions of components of the system of Figure 1 according to an example embodiment.
Figure 3 is a flow chart illustrating a method of deriving a CVC of a payment card according to an example embodiment.
Figure 4 is a flow chart illustrating a method of authorizing a transaction based on a CVC of a payment card data according to an example embodiment.
Figure 5 is a flow chart illustrating a method of generating a bitmap for deriving a CVC of a payment card according to an example embodiment.
Figure 6 is a diagram for deriving a CVC of a payment card and authorizing a transaction based on the CVC according to an example embodiment.

### DETAILED DESCRIPTION OF EXAMPLE EMBODIMENTS

The following description of embodiments provides non-limiting representative examples referencing numerals to particularly describe features and teachings of different aspects of the invention. The embodiments described will be recognized by a person of ordinary skill in the art as capable of implementation separately, or in combination, with other embodiments from the description of the embodiments. A person of ordinary skill in the art will further understand that the features and teachings of any embodiment can be interchangeably combined with the features and teachings of any other embodiment.

A person of ordinary skill in the art reviewing the description of embodiments will learn and understand the different described aspects of the invention. The description of embodiments will facilitate understanding of the invention to such an extent that other implementations, not specifically covered but within the knowledge of a person of skill in the art having read the description of embodiments, will be understood to be consistent with an application of the invention.

As described above, the traditional CVC generation process uses static service code, for example, 000, 999, 101, 202, and so forth, which may not significantly improve the security of the CVC generation and transaction authorization process. To overcome such deficiencies, example embodiments of the present disclosure provide systems and methods for deriving CVCs based on two specific unique data fields. The first data field is the social security number (SSN) or taxpayer identification number (TIN) of the customer and the second data field is the zip code where the customer resides. For example, the combination of one digit from the SSN (e.g., the digit in position seven in the SSN) and two digits from the zip code (e.g., the digits in positions two and four of the zip code) can be used as a service code for deriving the CVC, instead of a static service code as used in the conventional CVC derivation.

The exemplary systems disclosed herein can maintain a bitmap for customer's CVC, for example, for this customer the bitmap for that service code is: the digit in position number one of the service code is from a digit in position seven in the SSN and, and the digits in position number two and number three of the service code are from the digits in positions two and four of the zip code respectively. The exemplary systems and methods disclosed herein can then use the personal account number (PAN), the card expiry date, the three digit service code formed from the SSN and zip code, and the encryption security key to derive a CVC for that customer by using algorithms such as Triple-DES (3DES) with double length keys. The algorithms can be implemented in a hardware security module of the system. In this way, more variables and more security can be incorporated into the process of CVC generation and/or derivation. The derived CVC can be stored in the payment card by the system. The system can be associated with the payment card issuer.

The combination of digits from the SSN and zip code can vary for each customer, the bitmap of which can be maintained by the exemplary systems during the card issuance time. When the customer conducts a transaction, for example, the customer swipes the card or tap the card for example on a sale terminal, the CVC stored in the card is read and transmitted by the sale terminal to the system associated with the payment card issuer. The system can pass the received CVC and/or the PAN number of the payment card, the expiry date of the payment card, the service code associated with the payment card and referenced from the bitmap maintained by the system, and the encryption security key, back to the hardware security module. The hardware security module can then generate or derive a CVC from the PAN number of the payment card, the expiry date of the payment card, the service code associated with the payment card and referenced from the bitmap maintained by the system, and the encryption security key, and then compare the generated CVC with the received CVC from the sale terminal. If the generated CVC match the received CVC, then the payment card is authorized and the transaction is executed. If the generated CVC does not match the received CVC, then the payment card can be considered as a fraudulent card, and the transaction would not be executed. Herein, the payment card can be a magnetic stripe CVC card or a chip CVC card. The CVC can be printed on the back of the payment card.

In an exemplary embodiment, when a customer applies for a credit card, an approval decision process can be conducted and completed. After that, a PIN number for the credit card, which can also be referred to as an instrument identification (ID) or a card number can be generated by a card issuing system. An expiry date for that credit card can be assigned. When the PIN number, the expiry date, and customer information (e.g., social security number, home address including zip code of the customer) are available, which can be stored in a database, the systems and methods disclosed herein can retrieve those data from the database and can generate a bitmap which randomly selects the customer data fields, such as a combination of the SSN and the zip code. The combination of the SSN and the zip code can be assigned as or referred to as a dynamic service code in contrast to a static service code as used in the existing CVC derivation process. The dynamic service code can be stored into the customer record. A hardware security module (HSM) of the disclosed systems can then be used to generate a CVC for the credit card based on the bitmap including the combination of the data fields of the SSN and zip code. The bitmap including the dynamic service code can be stored in the database and retrieved by the HSM.

In an exemplary embodiment, the bitmap can comprise a customer reference number which is a reference for the customer data/record; an account reference number which is referenced to the customer's account transactions ledger and the posting transactions, and which is unique for every customer; a PAN which is a personal account number and is printed on a physical card and can be issued as a digital format; a PAN sequence number which is a number between 01 and 99 number, and is normally changed every time, e.g., a customer forgets the card at home, the card is damaged; the expiry date; and the dynamic service code, which is a combination of the data field of the SSN and zip code of the customer. Any one of those data elements changes, the bitmap would be changed by the disclosed systems. For example, when the customer reports the card is lost, stolen or fraud happened, a second sequence of the different card number for the same customer will be issued, and in that time the bitmap will be changed accordingly.

The exemplary disclosed systems can comprise a database storing the bitmap and the combination of the above data elements to maintain the bitmaps; a hardware security module which can perform a process of generating of the CVCs; applications software; and the business logic software which can perform the random number generation of the bitmap. By using the combination of random number generation, the bitmap itself is not fixed, for example, for a card number 1, its bitmap can use first few digits of the account number of the card number 1; for a card number 2, its bitmap can use last few digits of the account number of the card number 2, so the bitmap cannot be guessed, thus improving data security. A random number generator, e.g., a standard random number generator can be used to generate the bitmap for every request.

In an exemplary embodiment of a transaction and/or card authorization process, such as when a customer goes to a merchant and swipes a card to purchase a product or service on a point of sale (POS) terminal, the POS terminal can retrieve the card data stored in the card which has the combination of the CVC code, and transmit the card data to the card issuer system. The card issuer system can check, e.g., the PIN number combination and retrieve the bitmap from the database. The card issuer system retrieves the dynamic service code (e.g., a combination of the SNN and zip code associated with the customer) from the bitmap and uses the business logic software to pass that information back to the hardware security module and key management system to generate a CVC. The system can validate the received CVC from the POS terminal by comparing the generated CVC with the received CVC, and the purchase transaction can be approved or denied based on the validation results. The CVC value is generated during the issuance process of the card and is then stored in the card.

In an exemplary embodiment, the validation and/or authorization process does not send the received CVC value back to the HSM. The HSM regenerates the CVC value using the card data received from the POS terminal and the bitmap stored in the database. The exemplary systems disclosed herein compare the received CVC value with the regenerated CVC value to determine whether the card is validated based on the comparison.

In an exemplary embodiment, a static service code can comprise 3 digits, such as 999, 000, 101, 201, and so forth. The combination of a SSN and zip code can comprise 3 digits used as the dynamic service code, for example, 1 digit extracted from the SSN and 2 digits extracted from the zip code.

In an exemplary embodiment, the security and/or encryption key can be stored in the HSM/a key management system, for example, in a bin table. The security and/or encryption key can be retrieved based on a bin number associated with the card, and transmitted to the HSM to generate the CVC. For example, the security and/or encryption key can comprise triple-DES with double length keys or other key types.

Traditional CVC generation process uses static service code, which is not secure to the CVC generation and transaction authorization process. Further, existing payment industry still uses 3DES double length symmetric keys, which is less strong to the CVC generation process. The systems and methods disclosed herein can add additional randomness of the CVC generation process, thus improving data security. As used herein, a payment card can include credit cards, debit cards, digital / virtual cards, and so forth.

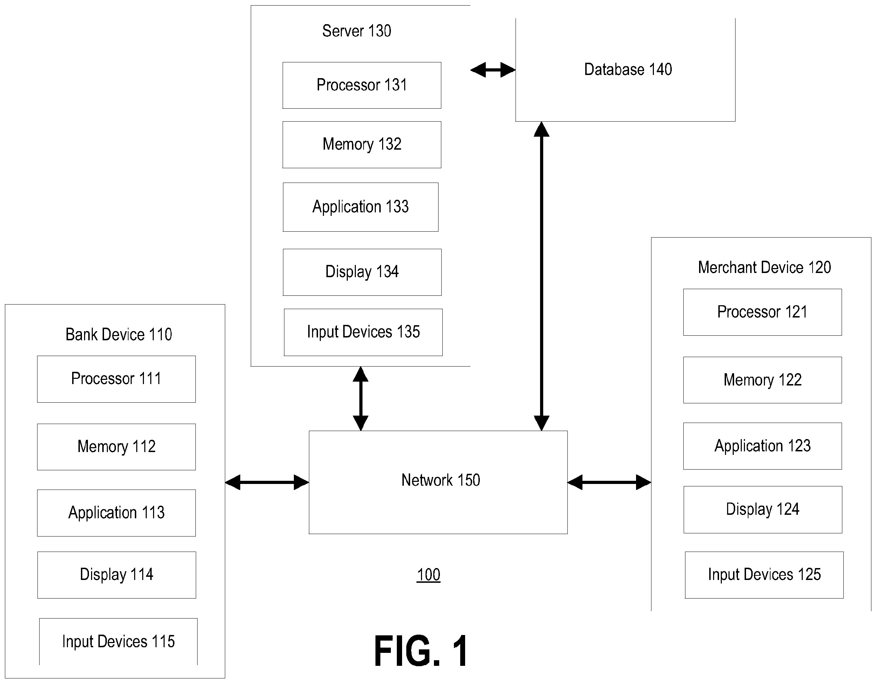

Figure 1 illustrates a system 100 for deriving a CVC of a payment card based on a customer's SSN and zip code, and authorizing a transaction based on the CVC according to an example embodiment. As further discussed below, the system 100 may include a bank device 110, a merchant device 120, a server 130, and a database 140 in communication using a network 150. Although Figure 1 illustrates single instances of the components, the system 100 may include any number of components.

The bank device 110 can be associated with a bank and configured to present a payment card issuance request to the server 130. The bank device 110 may be configured to receive customer's information such as SSN, national identification number (NIN), zip code, and so on. The merchant device 120 can be associated with a merchant, such as an online product or service providing merchant, and configured to transmit a transaction authentication request to the server 130. The server 130 may be associated with an institution, such as a financial institution (e.g., a bank), and can be configured to receive the payment card issuance request and the customer's information from the bank device 110 and the transaction authentication request from the merchant device 120.

The bank device 110 may be a network-enabled computer device. Exemplary network-enabled computer devices include, without limitation, a server, a network appliance, a personal computer, a workstation, a phone, a handheld personal computer, a personal digital assistant, a thin client, a fat client, an Internet browser, a mobile device, a kiosk, a smart card (e.g., a contactless card, a contact-based card), or other a computer device or communications device. For example, network-enabled computer devices may include an iPhone, iPod, iPad from Apple^{®} or any other mobile device running Apple's iOS^{®} operating system, any device running Microsoft's Windows^{®} Mobile operating system, any device running Google's Android^{®} operating system, and/or any other smartphone, tablet, or like wearable mobile device.

The bank device 110 may include a processor 111, a memory 112, an application 113, a display 114, and input devices 115. The processor 111 may be a processor, a microprocessor, or other processor, and the bank device 110 may include one or more of these processors. The processor 111 may include processing circuitry, which may contain additional components, including additional processors, memories, error and parity/CRC checkers, data encoders, anti-collision algorithms, controllers, command decoders, security primitives and tamper-proofing hardware, as necessary to perform the functions described herein.

The processor 111 may be coupled to the memory 112. The memory 112 may be a read-only memory, write-once read-multiple memory or read/write memory, e.g., RAM, ROM, and EEPROM, and the bank device 110 may include one or more of these memories. A read-only memory may be factory programmable as read-only or one-time programmable. One-time programmability provides the opportunity to write once then read many times. A write-once read-multiple memory may be programmed at a point in time after the memory chip has left the factory. Once the memory is programmed, it may not be rewritten, but it may be read many times. A read/write memory may be programmed and re-programed many times after leaving the factory. It may also be read many times. The memory 112 may be configured to store one or more software applications, such as application 113, and other data, such as private and personal information.

The application 113 may comprise one or more software applications comprising instructions for execution on the bank device 110. In some examples, the bank device 110 may execute one or more applications, such as software applications, that enable, for example, network communications with one or more components of the system 100, transmit and/or receive data, and perform the functions described herein. Upon execution by the processor 111, the application 113 may provide the functions described in this specification, specifically to execute and perform the steps and functions in the process flows described below. Such processes may be implemented in software, such as software modules, for execution by computers or other machines. The application 113 may provide graphic user interfaces (GUIs) through which users may view and interact with other components and devices within the system 100. The GUIs may be formatted, for example, as web pages in HyperText Markup Language (HTML), Extensible Markup Language (XML) or in any other suitable form for presentation on a display device depending upon applications used by users to interact with the system 100.

The bank device 110 may further include a display 114 and input devices 115. The display 114 may be any type of device for presenting visual information such as a computer monitor, a flat panel display, and a mobile device screen, including liquid crystal displays, light-emitting diode displays, plasma panels, and cathode ray tube displays. The input devices 115 may include any device for entering information into the bank device 110 that is available and supported by the bank device 110, such as a touch-screen, keyboard, mouse, cursor-control device, touch-screen, microphone, digital camera, video recorder or camcorder. These devices may be used to enter information and interact with the software and other devices described herein.

The merchant device 120 may be a network-enabled computer device. Exemplary network-enabled computer devices include, without limitation, a merchant device, a network appliance, a personal computer, a workstation, a phone, a handheld personal computer, a personal digital assistant, a thin client, a fat client, an Internet browser, a mobile device, a kiosk, a smart card (e.g., a contactless card, a contact-based card), or other a computer device or communications device. For example, network-enabled computer devices may include an iPhone, iPod, iPad from Apple^{®} or any other mobile device running Apple's iOS^{®} operating system, any device running Microsoft's Windows^{®} Mobile operating system, any device running Google's Android^{®} operating system, and/or any other smartphone, tablet, or like wearable mobile device.

The merchant device 120 may include a processor 121, a memory 122, and an application 123. The processor 121 may be a processor, a microprocessor, or other processor, and the merchant device 120 may include one or more of these processors. The processor 121 may include processing circuitry, which may contain additional components, including additional processors, memories, error and parity/CRC checkers, data encoders, anti-collision algorithms, controllers, command decoders, security primitives and tamper-proofing hardware, as necessary to perform the functions described herein.

The processor 121 may be coupled to the memory 122. The memory 122 may be a read-only memory, write-once read-multiple memory or read/write memory, e.g., RAM, ROM, and EEPROM, and the merchant device 120 may include one or more of these memories. A read-only memory may be factory programmable as read-only or one-time programmable. One-time programmability provides the opportunity to write once then read many times. A write-once read-multiple memory may be programmed at a point in time after the memory chip has left the factory. Once the memory is programmed, it may not be rewritten, but it may be read many times. A read/write memory may be programmed and re-programed many times after leaving the factory. It may also be read many times. The memory 122 may be configured to store one or more software applications, such as the application 123, and other data, such as user's shopping and financial account information.

The application 123 may comprise one or more software applications comprising instructions for execution on the merchant device 120. In some examples, the merchant device 120 may execute one or more applications, such as software applications, that enable, for example, network communications with one or more components of the system 100, transmit and/or receive data, and perform the functions described herein. Upon execution by the processor 121, the application 123 may provide the functions described in this specification, specifically to execute and perform the steps and functions in the process flows described below. Such processes may be implemented in software, such as software modules, for execution by computers or other machines. The application 123 may provide GUIs through which a user may view and interact with other components and devices within the system 100. The GUIs may be formatted, for example, as web pages in HyperText Markup Language (HTML), Extensible Markup Language (XML) or in any other suitable form for presentation on a display device depending upon applications used by users to interact with the system 100.

The merchant device 120 may further include a display 124 and input devices 125. The display 124 may be any type of device for presenting visual information such as a computer monitor, a flat panel display, and a mobile device screen, including liquid crystal displays, light-emitting diode displays, plasma panels, and cathode ray tube displays. The input devices 125 may include any device for entering information into the merchant device 120 that is available and supported by the merchant device 120, such as a touch-screen, keyboard, mouse, cursor-control device, touch-screen, microphone, digital camera, video recorder or camcorder. These devices may be used to enter information and interact with the software and other devices described herein.

The server 130 may be a network-enabled computer device. Exemplary network-enabled computer devices include, without limitation, a server, a network appliance, a personal computer, a workstation, a phone, a handheld personal computer, a personal digital assistant, a thin client, a fat client, an Internet browser, a mobile device, a kiosk, a smart card (e.g., a contactless card, a contact-based card), or other a computer device or communications device. For example, network-enabled computer devices may include an iPhone, iPod, iPad from Apple^{®} or any other mobile device running Apple's iOS^{®} operating system, any device running Microsoft's Windows^{®} Mobile operating system, any device running Google's Android^{®} operating system, and/or any other smartphone, tablet, or like wearable mobile device.

The server 130 may include a processor 131, a memory 132, and an application 133. The processor 131 may be a processor, a microprocessor, or other processor, and the server 130 may include one or more of these processors. The processor 131 may include processing circuitry, which may contain additional components, including additional processors, memories, error and parity/CRC checkers, data encoders, anti-collision algorithms, controllers, command decoders, security primitives and tamper-proofing hardware, as necessary to perform the functions described herein.

The processor 131 may be coupled to the memory 132. The memory 132 may be a read-only memory, write-once read-multiple memory or read/write memory, e.g., RAM, ROM, and EEPROM, and the server 130 may include one or more of these memories. A read-only memory may be factory programmable as read-only or one-time programmable. One-time programmability provides the opportunity to write once then read many times. A write-once read-multiple memory may be programmed at a point in time after the memory chip has left the factory. Once the memory is programmed, it may not be rewritten, but it may be read many times. A read/write memory may be programmed and re-programed many times after leaving the factory. It may also be read many times. The memory 132 may be configured to store one or more software applications, such as the application 133, and other data, such as user's shopping and financial account information.

The application 133 may comprise one or more software applications comprising instructions for execution on the server 130. In some examples, the server 130 may execute one or more applications, such as software applications, that enable, for example, network communications with one or more components of the system 100, transmit and/or receive data, and perform the functions described herein. Upon execution by the processor 131, the application 133 may provide the functions described in this specification, specifically to execute and perform the steps and functions in the process flows described below. Such processes may be implemented in software, such as software modules, for execution by computers or other machines. The application 133 may provide GUIs through which a user may view and interact with other components and devices within the system 100. The GUIs may be formatted, for example, as web pages in HyperText Markup Language (HTML), Extensible Markup Language (XML) or in any other suitable form for presentation on a display device depending upon applications used by users to interact with the system 100.

The server 130 may further include a display 134 and input devices 135. The display 134 may be any type of device for presenting visual information such as a computer monitor, a flat panel display, and a mobile device screen, including liquid crystal displays, light-emitting diode displays, plasma panels, and cathode ray tube displays. The input devices 135 may include any device for entering information into the server 130 that is available and supported by the server 130, such as a touch-screen, keyboard, mouse, cursor-control device, touch-screen, microphone, digital camera, video recorder or camcorder. These devices may be used to enter information and interact with the software and other devices described herein.

The database 140 may be one or more databases configured to store data, including without limitation, private information of users including SSN and zip code, financial accounts of users, transactions of users, and credit lines of users. The database 140 may comprise a relational database, a non-relational database, or other database implementations, and any combination thereof, including a plurality of relational databases and non-relational databases. In some examples, the database 140 may comprise a desktop database, a mobile database, or an in-memory database. Further, the database 140 may be hosted internally by the server 130 or may be hosted externally of the server 130, such as by a server, by a cloud-based platform, or in any storage device that is in data communication with the server 130.

The system 100 may include one or more networks 150. In some examples, the network 150 may be one or more of a wireless network, a wired network or any combination of wireless network and wired network, and may be configured to connect the bank device 110, the merchant device 120, the server 130, and the database 140. For example, the network 150 may include one or more of a fiber optics network, a passive optical network, a cable network, an Internet network, a satellite network, a wireless local area network (LAN), a Global System for Mobile Communication, a Personal Communication Service, a Personal Area Network, Wireless Application Protocol, Multimedia Messaging Service, Enhanced Messaging Service, Short Message Service, Time Division Multiplexing based systems, Code Division Multiple Access based systems, D-AMPS, Wi-Fi, Fixed Wireless Data, IEEE 802.11b, 802.15.1, 802.11n and 802.11g, Bluetooth, NFC, Radio Frequency Identification (RFID), Wi-Fi, and/or the like.

In addition, the network 150 may include, without limitation, telephone lines, fiber optics, IEEE Ethernet 902.3, a wide area network, a wireless personal area network, a LAN, or a global network such as the Internet. In addition, the network 150 may support an Internet network, a wireless communication network, a cellular network, or the like, or any combination thereof. The network 150 may further include one network, or any number of the exemplary types of networks mentioned above, operating as a stand-alone network or in cooperation with each other. The network 150 may utilize one or more protocols of one or more network elements to which they are communicatively coupled. The network 150 may translate to or from other protocols to one or more protocols of network devices. Although the network 150 is depicted as a single network, it should be appreciated that according to one or more examples, the network 150 may comprise a plurality of interconnected networks, such as, for example, the Internet, a service provider's network, a cable television network, corporate networks, such as credit card association networks, and home networks. The network 150 may further comprise, or be configured to create, one or more front channels, which may be publicly accessible and through which communications may be observable, and one or more secured back channels, which may not be publicly accessible and through which communications may not be observable.

In some examples, communications between the bank device 110, merchant device 120, server 130, and database 140 using the network 150 can occur using one or more front channels and one or more secure back channels. A front channel may be a communication protocol that employs a publicly accessible and/or unsecured communication channel such that a communication sent to the bank device 110, merchant device 120, server 130, and/or database 140 may originate from any other device, whether known or unknown to the bank device 110, merchant device 120, server 130, , and/or database 140, if that device possesses the address (e.g., network address, Internet Protocol (IP) address) of the bank device 110, merchant device 120, server 130, and/or database 140. Exemplary front channels include, without limitation, the Internet, an open network, and other publicly-accessible communication networks. In some examples, communications sent using a front channel may be subject to unauthorized observation by another device. In some examples, front channel communications may comprise Hypertext Transfer Protocol (HTTP) secure socket layer (SSL) communications, HTTP Secure (HTTPS) communications, and browser-based communications with a server or other device.

A secure back channel may be a communication protocol that employs a secured and/or publicly inaccessible communication channel. A secure back channel communication sent to the bank device 110, merchant device 120, server 130, and/or database 140 may not originate from any device, and instead may only originate from a selective number of parties. In some examples, the selective number of devices may comprise known, trusted, or otherwise previously authorized devices. Exemplary secure back channels include, without limitation, a closed network, a private network, a virtual private network, an offline private network, and other private communication networks. In some examples, communications sent using a secure back channel may not be subject to unauthorized observation by another device. In some examples, secure back channel communications may comprise Hypertext Transfer Protocol (HTTP) secure socket layer (SSL) communications, HTTP Secure (HTTPS) communications, and browser-based communications with a server or other device.

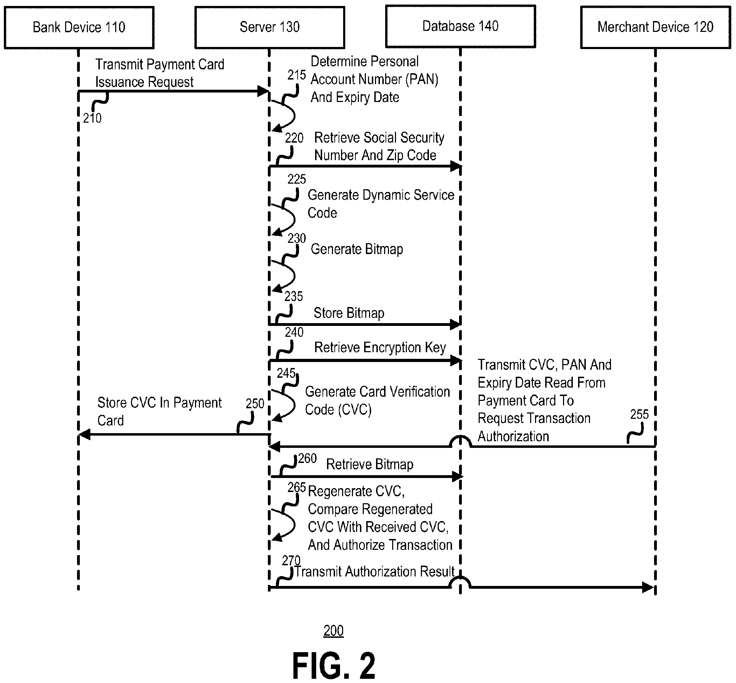

Figure 2 is a diagram 200 illustrating interactions of components of the system 100 of Figure 1 according to an example embodiment. Figure 2 may reference the same or similar components as those illustrated in Figure 1, including a bank device 110, a merchant device 120, a server 130, a database 140 and a network 150.

At step 210, a bank device 110 may transmit a payment card issuance request to a server 130. For example, when the bank device 110 receives a message from a user requesting issuance of a payment card, the bank device 110 can transmit the payment card issuance request to the server 130.

At step 215, the server 130 may determine a personal account number (PAN) and an expiry date for the payment card. For example, the server 130 may determine the PAN and the expiry date based on the user's personal profile such as a credit history of the user, a job title of the user, a household income of the user, and so on.

At step 220, the server 130 may retrieve a social security number (SSN) and zip code associated with the user from the database 140. For example, the SSN and zip code of the user may be provided by the user to the bank device 110 when the user submits his or her application for the payment card. The SSN and the zip code are stored in the database 140. In some embodiments, a taxpayer identification number (TIN) of the user may be used as well.

At step 225, the server 130 may generate a dynamic service code based on the SSN and the zip code. As described above, the traditional CVC generation process uses a static service code, for example, 000, 999, 101, 202, and so forth, which is subject to security break for the user CVC generation and transaction authorization process (e.g., the static service code can be readily guessed). In the example embodiments of the present disclosure, a dynamic service code can be generated based on two specific unique data fields: the first data field is the social security number (SSN) or taxpayer identification number (TIN) of the user; and the second data field is the zip code where the user resides. For example, the combination of one digit from the SSN (e.g., the digit in position seven in the SSN) and two digits from the zip code (e.g., the digits in positions two and four of the zip code) can be used as a service code, instead of a static service code as used in the conventional CVC derivation. Any combination including three digits from the SSN and the zip code can be used to generate a dynamic service code.

At step 230, the server 130 may generate a bitmap. For example, the bitmap can be generated based on the dynamic code, the PAN number, and/or the expiry date. For example, the bitmap for that service code can be: the digit in position number one of the service code is from a digit in position seven in the SSN, and the digits in positions number two and number three of the service code are from the digits in positions two and four of the zip code respectively. The bitmap can further comprise digits from the PAN and the expiry date.

At step 235, the server 130 may store the bitmap to the database 140. The bitmap can be used later for deriving a CVC, for example, for a transaction authorization.

At step 240, the server 130 may retrieve an encryption key from the database 140. The encryption key can be any suitable encryption key, such as one or more private keys.

At step 245, the server 130 may generate a CVC for the payment card. The server 130 can use the bitmap including digits from the PAN number, the card expiry date, the dynamic service code formed from the SSN and zip code, and along with the encryption key to derive a CVC for the payment card by using, for example, algorithms such as Triple-DES (3DES) with double length keys. The algorithms can be implemented in a hardware security module (HSM) of the system 100. In this way, more variables and more security can be incorporated into the process of CVC derivation.

At step 250, the server may store the derived CVC in the payment card. The payment card may then be ready for the bank device 110 to issue to the user.

When the user uses the payment card to purchase products or services from a merchant associated with the merchant device 120, for example, the user swipes the payment card or taps the payment card on the merchant device 120 (e.g., a point of sale terminal device), a CVC, a PAN, and an expiry date stored in the payment card can be read by the merchant device 120. The merchant device, at step 255, may transmit to the server 130 the CVC, PAN, and expiry date read from the payment card to request a transaction authorization.

At step 260, the server 130 may retrieve the bitmap stored in the database. For example, the server 130 may use the PAN and/or expiry date received from the merchant device 120 to search the database 140 for the user and the bitmap associated with the payment card.

At step 265, the server 130 may use the HSM to regenerate a CVC based on the bitmap. The hardware security module can generate a CVC from the bitmap using the encryption key. The server 130 may compare the regenerated CVC with the received CVC from the merchant device 120. If the regenerated CVC matches the received CVC, then the payment card is authorized and the transaction is executed. If the regenerated CVC does not match the received CVC, then the payment card can be considered as a fraudulent card, and the transaction would not be executed.

At step 270, the server 130 may transmit an authorization result back to the merchant device 120. The authorization result can be a message indicating the transaction is either approved or declined.

In some embodiments, the combination of digits from the SSN and zip code can vary for each user, the bitmap of which can be maintained in the database 140 by the server 130.

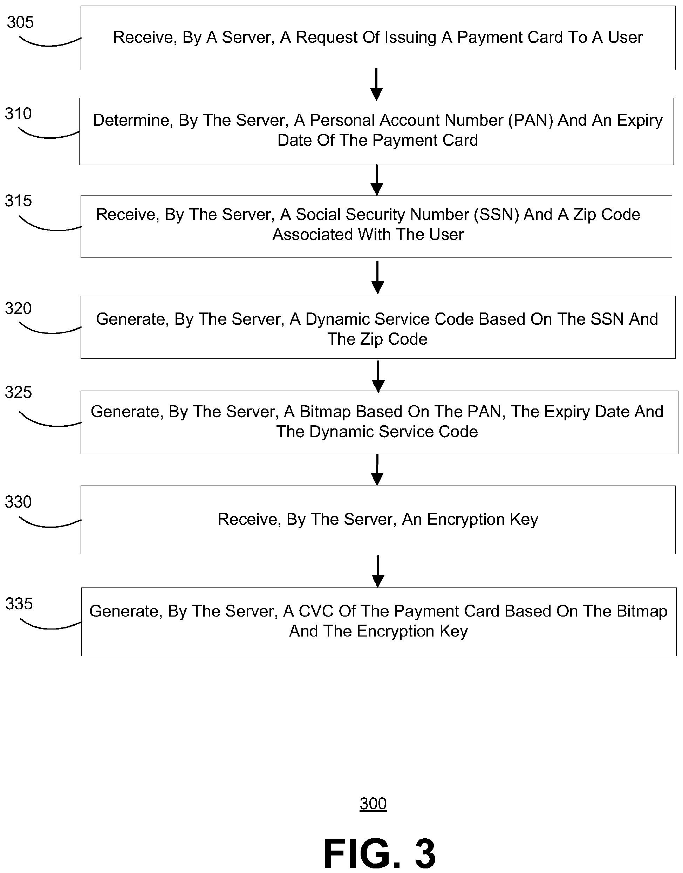

Figure 3 is a flow chart illustrating a method 300 of deriving a CVC of a payment card according to an example embodiment. Figure 3 may reference the same or similar components as those illustrated in Figures 1-2, including a bank device 110, a merchant device 120, a server 130, and a database 140. The method 300 may include, but not limited to, the following steps.

In step 305, the server 130 may receive a request of issuing a payment card to a user from the bank device 110. For example, when the user applies for a payment card, an approval decision process can be conducted and completed by the bank device 110. After that, the bank device 110 may transmit the request of issuing a payment card to the server 130.

At step 310, the server 130 may determine a personal account number (PAN) and an expiry date of the payment card. The server 130 may determine the PAN and the expiry date based on the user's personal profile such as a credit history of the user, a job title of the user, a household income of the user, and so on. The server 130 may then store the PAN and the expiry date of the payment card in the database 140.

At step 315, the server 130 may receive a social security number (SSN) and a zip code associated with the user. The social security number and home address including a zip code of the user may be received first by the bank device 110 from the user when the user applies for the payment card, and then stored in the database 140. The server 130 can retrieve those data from the database 140.

At step 320, the server 130 may generate a dynamic service code based on the SSN and the zip code. The dynamic service code can be generated based on two specific unique data fields: the first data field is the social security number (SSN) or taxpayer identification number (TIN) of the user; and the second data field is the zip code where the user resides. For example, the combination of one digit from the SSN (e.g., the digit in position seven in the SSN) and two digits from the zip code (e.g., the digits in positions two and four of the zip code) can be used as a service code, instead of a static service code as used in the conventional CVC derivation. Any combination including three digits from the SSN and the zip code can be used to generate a dynamic service code.

At step 325, the server may generate a bitmap based on the PAN, the expiry date and the dynamic service code. The bitmap can comprise the dynamic service code and digits randomly selected from the PAN and the expiry date. The bitmap can comprise a customer reference number which is a reference for the customer data/record; an account reference number which is referenced to the customer's account transactions ledger and the posting transactions, and which is unique for every customer; the PAN which is a personal account number and is printed on a physical card and can be issued as a digital format; a PAN sequence number which is a number between 01 and 99 number, and is normally changed every time, e.g., a customer forgets the card at home, the card is damaged; the expiry date; and the dynamic service code, which is a combination of the data field of the SSN and zip code of the user. Any one of those data elements changes, the bitmap would be changed. For example, when the user reports the card is lost, stolen or fraud happened, a second sequence of the different card number for the same user will be issued, and in that time the bitmap will be changed accordingly.

At step 330, the server 130 may receive an encryption key from the database 140. The encryption key can be any suitable encryption key, such as private keys.

At step 335, the server 130 may generate a CVC for the payment card. The server 130 can use the bitmap including digits from the PAN number, the card expiry date, the dynamic service code formed from the SSN and zip code, and along with the encryption key to derive a CVC for the payment card by using, for example, algorithms such as Triple-DES (3DES) with double length keys. The algorithms can be implemented in a hardware security module (HSM) of the system 100. In this way, more variables and more security can be incorporated into the process of CVC derivation. The server may store the derived CVC in the payment card. The payment card may then be ready for the bank device 110 to issue to the user.

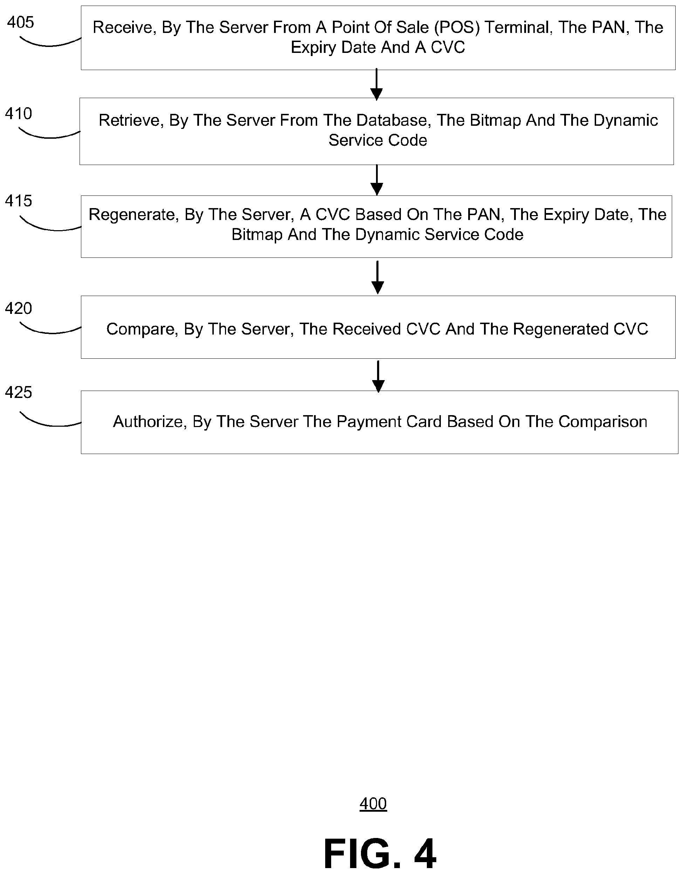

Figure 4 is a flow chart illustrating a method 400 of authorizing a transaction based on a CVC of a payment card data according to an example embodiment. Figure 4 may reference the same or similar components as those illustrated in Figures 1-3, including a bank device 110, a merchant device 120, a server 130, and a database 140. The method 400 may include, but is not limited to, the following steps.

When the user goes to a merchant and swipes a payment card to purchase a product or service on a POS terminal such as the merchant device 120, the POS terminal can retrieve the payment card data stored in the payment card which includes a CVC code, PAN and expiry date, and transmit the payment card data to the server 130. Accordingly, at step 405, the server 130 may receive, from a point of sale (POS) terminal, the PAN, the expiry date and the CVC read from the payment card by the POS terminal.

At step 410, the server may check the PAN and/or the expiry date, and retrieve the bitmap and/or the dynamic service code associated with the payment card from the database 140. At step 415, the server 130 can use the hardware security module and the encryption key to regenerate a CVC based on the PAN, the expiry date, the bitmap and/or the dynamic service code. At step 420, the server 130 may compare the CVC received from the POS terminal with the regenerated CVC. For example, the server 130 may validate the received CVC from the POS terminal by comparing the regenerated CVC with the received CVC.

At step 425, the server 130 may authorize the payment card based on the comparison. For example, if the comparison determines that the received CVC matches the regenerated CVC, then the purchase transaction can be approved; if the comparison determines that the received CVC dose not match the regenerated CVC, then the purchase transaction can be denied. This validation and/or authorization process does not send the received CVC value back to the HSM. The HSM regenerates the CVC value using the card data received from the POS terminal and the bitmap stored in the database 140. The server 130 compares the received CVC value with the regenerated CVC value to determine whether the payment card is validated based on the comparison.

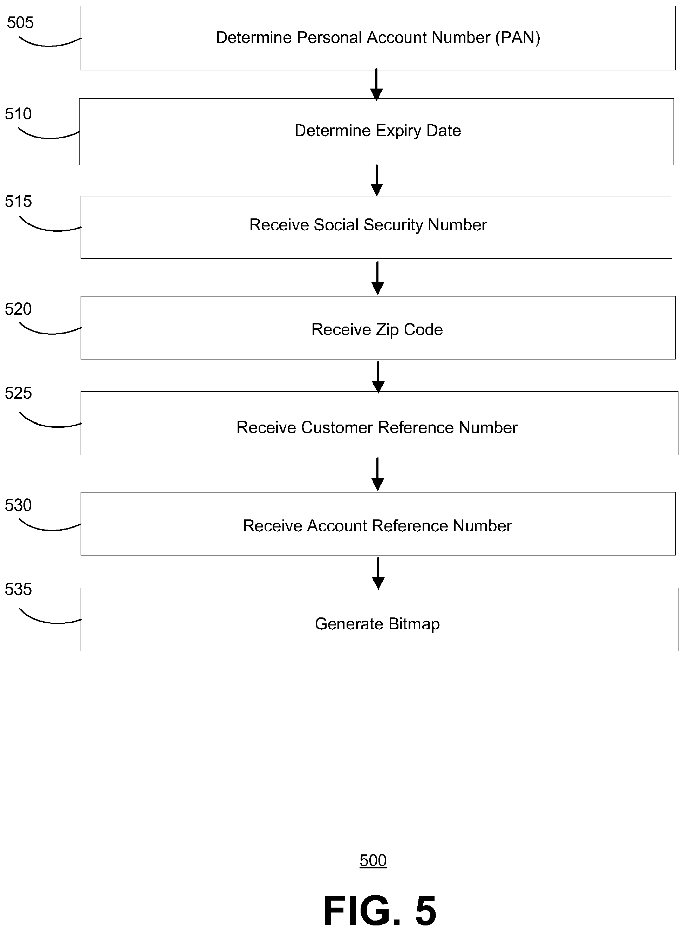

Figure 5 is a flow chart illustrating a method 500 of generating a bitmap for deriving a CVC of a payment card according to an example embodiment. Figure 5 may reference the same or similar components as those illustrated in Figures 1-4, including a bank device 110, a merchant device 120, a server 130, and a database 140. The method 500 may include, but is not limited to, the following steps.

At step 505, the server 130 determines a personal account number (PAN) of a payment card. At step 510, the server 130 determines an expiry date of the payment card. For example, when the bank device 110 transmits to the server 130 a message indicating issuing the payment card, the server 130 can determine the PAN and the expiry date based on the application profile of a user who applies for the payment card, such as the user's credit card score, credit card application history, household income, and so forth. At step 515, the server 130 receives a SSN of the user. At step 520, the server 130 receives a zip code associated with the user, for example, the zip code of the home address of the user. The SSN and zip code may be retrieved by the server 130 from the database 140. At step 525, the server 130 may receive a customer reference number. The customer reference number is a reference for the customer data/record stored in the database 140. At step 530, the server 130 may receive an account reference number. The account reference number is a number referenced to the customer's account transactions ledger and the posting transactions, and which is unique for every customer.

At step 535, the server 130 may generate a bitmap based on the above information. The bitmap can be generated by performing a random number generator. By using the random number generation, the bitmap itself is not fixed, for example, for a payment card number 1, its bitmap can use first few digits of the PAN of the payment card number 1; for a card number 2, its bitmap can use last few digits of the PAN of the payment card number 2, so the bitmap cannot be guessed, thus improving data security. A random number generator, e.g., a standard random number generator can be used to generate the bitmap for every request.

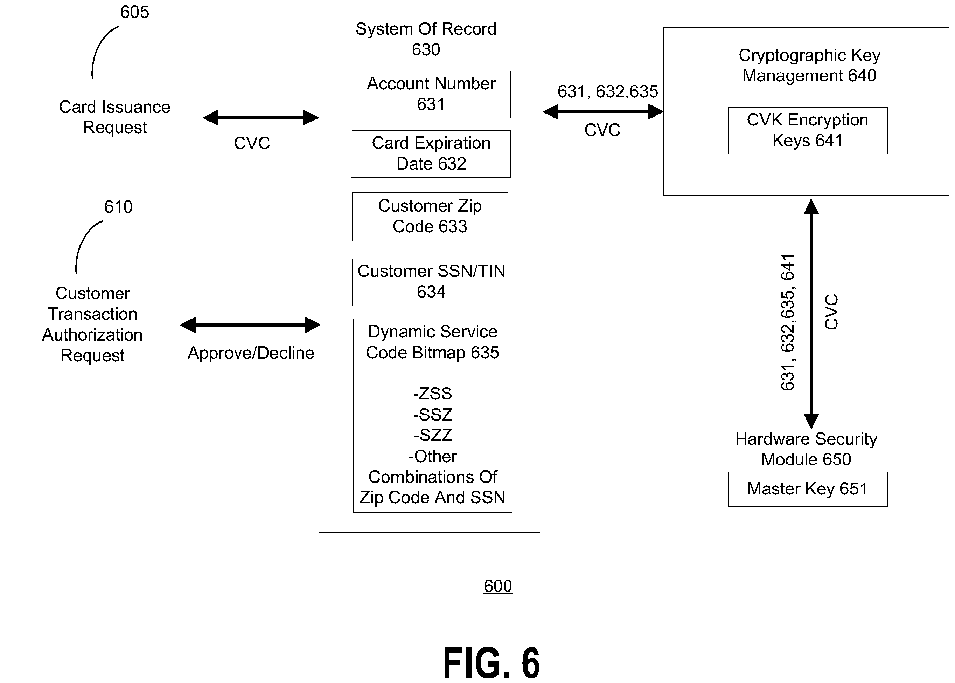

Figure 6 is a diagram 600 for deriving a CVC of a payment card and authorizing a transaction based on the CVC according to an example embodiment. In block 605, a card issuance request can be transmitted by a card issuer to a system of record 630 (such as a server) for issuing a payment card. The card issuance request includes generating a CVC for the payment card.

The system of record 630 can store an account number 631 associated with the payment card, a card expiration date 632 of the payment card, a customer zip code 633 of a user of the payment card, and a customer SSN or TIN of the user. The system of record 630 can also store a dynamic service code bitmap 635, such as ZSS where the letter Z represents a digit from the zip code, the letter S represents a digit from the SSN, accordingly the ZSS represents a dynamic service code comprising one digit from the zip code and two digits from the SSN. The dynamic service code can be any combination of the zip code and SSN, such as ZSS, SSZ, SZZ, and other combinations of the zip code and SSN. The account number 631, the card expiration date 632, and the dynamic service code bitmap 635 are transmitted from the system of record 630 to a cryptographic key management 640.

The cryptographic key management 640 can store card verification key (CVK) encryption keys 641. The account number 631, the card expiration date 632, the dynamic service code bitmap 635 and the CVK encryption keys 641 are transmitted from the cryptographic key management 640 to a hardware security module (HSM) 650. The HSM 650 generates a CVC for the payment card using a master key 651, the account number 631, the card expiration date 632, the dynamic service code bitmap 635 and the CVK encryption keys 641. The CVC is then transmitted from the HSM 650 to the cryptographic key management 640, the system of record 630 and back to the card issuer, and then is stored in the payment card.

When a user of the payment card initiates a transaction, such as purchasing products from a merchant using the payment card, the merchant may transmit a customer transaction authorization request in block 610 to the system of record 630. The customer transaction authorization request may comprise a CVC, an account number of the payment card, and a expiration date read from the payment card. The system of record 630 can use the received account number to identify the payment card. The account number 631, the card expiration date 632, and the dynamic service code bitmap 635 are then transmitted from the system of record 630 to the cryptographic key management 640. The account number 631, the card expiration date 632, the dynamic service code bitmap 635 and the CVK encryption keys 641 are then transmitted from the cryptographic key management 640 to the HSM 650. The HSM 650 regenerates a CVC for the payment card using the master key 651, the account number 631, the card expiration date 632, the dynamic service code bitmap 635 and the CVK encryption keys 641. The regenerated CVC is then transmitted from the HSM 650 to the cryptographic key management 640, then to the system of record 630. The system of record 630 can compare the received CVC from the customer transaction authorization request with the regenerated CVC to approve or decline the customer transaction. For example, if the received CVC matches the regenerated CVC, the customer transaction is approved. If the received CVC does not match the regenerated CVC, the customer transaction is declined.

In some aspects, the techniques described herein relate to a method for deriving a card verification code (CVC) of a payment card, including: receiving, by a server, a request of issuing a payment card to a user; determining, by the server, a personal account number (PAN) and an expiry date of the payment card; receiving, by the server, a social security number (SSN) and a zip code associated with the user; generating, by the server, a dynamic service code based on the SSN and the zip code; generating, by the server, a bitmap based on the PAN, the expiry date, and the dynamic service code; receiving, by the server, an encryption key; and generating, by the server, a CVC of the payment card based on the bitmap and the encryption key.

In some aspects, the techniques described herein relate to a method, further including storing, by the server, the CVC in the payment card.

In some aspects, the techniques described herein relate to a method, further including: receiving, by the server, a customer reference number associated with the user; and generating, by the server, the CVC of the payment card based on the customer reference number.

In some aspects, the techniques described herein relate to a method, further including: receiving, by the server, a PAN sequence number associated with the user; and generating, by the server, the CVC of the payment card based on the PAN sequence number.

In some aspects, the techniques described herein relate to a method, wherein the bitmap is generated by the server using a random number generator.

In some aspects, the techniques described herein relate to a method, wherein the dynamic service code includes one digit from a data field of the SSN and two digits from a data field of the zip code.

In some aspects, the techniques described herein relate to a method, further including storing, by the server, the bitmap and the dynamic service code in a database.

In some aspects, the techniques described herein relate to a method, further including: receiving, by the server from a point of sale (POS) terminal, the PAN, the expiry date, and a CVC; retrieving, by the server from the database, the bitmap and the dynamic service code; regenerating, by the server, a CVC based on the PAN, the expiry date, the bitmap and the dynamic service code; comparing, by the server, the received CVC and the regenerated CVC; and authorizing, by the server, the payment card based on the comparison.

In some aspects, the techniques described herein relate to a method, wherein the CVC is generated by the server using triple-DES encryption with double length keys.

In some aspects, the techniques described herein relate to a system for deriving a card verification code (CVC) of a payment card, including: a server, the server configured to: receive a request of issuing a payment card to a user; determine a personal account number (PAN) and an expiry date of the payment card; receive a social security number (SSN) and a zip code associated with the user; generate a dynamic service code based on the SSN and the zip code; generate a bitmap based on the PAN, the expiry date and the dynamic service code; receive an encryption key; and generate a CVC of the payment card based on the bitmap and the encryption key.

In some aspects, the techniques described herein relate to a system, wherein the server is further configured to: receive an account reference number associated with the user; and generate the CVC of the payment card based on the account reference number.

In some aspects, the techniques described herein relate to a system, wherein the server includes a random number generator configured to generate the bitmap.

In some aspects, the techniques described herein relate to a system, wherein the dynamic service code includes two digits from a data field of the SSN and one digit from a data field of the zip code.

In some aspects, the techniques described herein relate to a system, wherein: the bitmap and the dynamic service code are stored in a database, and the server is further configured to: receive from a point of sale (POS) terminal, the PAN, the expiry date and a CVC, retrieve from the database the bitmap and the dynamic service code, regenerate a CVC based on the PAN, the expiry date, the bitmap and the dynamic service code, compare the received CVC and the regenerated CVC, and authorize the payment card based on the comparison.

In some aspects, the techniques described herein relate to a system, wherein the server is further configured to: receive a personal identification number (PIN) associated with the user; and generate the CVC of the payment card based on the PIN.

In some aspects, the techniques described herein relate to a system, wherein the server includes a hardware secure module (HSM) configured to generate the CVC.

In some aspects, the techniques described herein relate to a system, wherein the server is further configured to: receive a taxpayer identification number (TIN) associated with the user; generate the dynamic service code based on the TIN.

In some aspects, the techniques described herein relate to a system, wherein the server includes a key management system configured to store the encryption key.

In some aspects, the techniques described herein relate to a non-transitory, computer-readable medium including instructions for deriving a card verification code (CVC) of a payment card that, when executed on a computer arrangement, causes the computer arrangement to perform actions including: receiving a request of issuing a payment card to a user; determining a personal account number (PAN) and an expiry date of the payment card; receiving a social security number (SSN) and a zip code associated with the user; generating a dynamic service code based on the SSN and the zip code; generating a bitmap based on the PAN, the expiry date and the dynamic service code; receiving an encryption key; and generating a CVC of the payment card based on the bitmap and the encryption key..

The systems and methods of the present disclosure also provide advantages to add additional randomness of CVC generation process. By replacing the existing service code with two fields of the SSN and/or zip code, a dynamic service code can be generated. The two fields of the SSN and/or zip code can include any one digit of the customer SSN or national identification number, any two digits of the customer's zip code, or any different combination of the SSN and zip code. The systems and methods disclosed herein can randomly pick the positions of the SSN and zip code and maintain the bitmap positions of the SSN and zip code used to generate the CVC at customer account level. During a transaction authorization process, the SSN and zip code data is used based on the customer account level bitmap to regenerate the CVC and compare to approve or decline the transaction. The systems and methods of the present disclosure can provide a secure way for a customer CVC generation and transaction authorization process.

As used herein, the term "payment card" or "card" is not limited to a particular type of card. Rather, it is understood that these terms can refer to a contact-based card, a contactless card, a credit card, a debit card, a digital card, a virtual card or any other card, unless otherwise indicated. It is further understood that the present disclosure is not limited to cards having a certain purpose (e.g., payment cards, gift cards, identification cards, membership cards, transportation cards, access cards), to cards associated with a particular type of account (e.g., a credit account, a debit account, a membership account), or to cards issued by a particular entity (e.g., a commercial entity, a financial institution, a government entity, a social club). Instead, it is understood that the present disclosure includes cards having any purpose, account association, or issuing entity.

In some examples, exemplary procedures in accordance with the present disclosure described herein can be performed by a processing arrangement and/or a computing arrangement (e.g., a computer hardware arrangement). Such processing and/or computing arrangement can be, for example entirely or a part of, or include, but not limited to, a computer and/or processor that can include, for example one or more microprocessors, and use instructions stored on a computer-accessible medium (e.g., RAM, ROM, hard drive, or other storage device). For example, a computer-accessible medium can be part of the memory of the bank device 110, the server 130 or other computer hardware arrangement.

In some examples, a computer-accessible medium (e.g., as described herein above, a storage device such as a hard disk, floppy disk, memory stick, CD-ROM, RAM, ROM, etc., or a collection thereof) can be provided (e.g., in communication with the processing arrangement). The computer-accessible medium can contain executable instructions thereon. In addition or alternatively, a storage arrangement can be provided separately from the computer-accessible medium, which can provide the instructions to the processing arrangement so as to configure the processing arrangement to execute certain exemplary procedures, processes, and methods, as described herein above.

It is further noted that the systems and methods described herein may be tangibly embodied in one or more physical media, such as, but not limited to, a compact disc (CD), a digital versatile disc (DVD), a floppy disk, a hard drive, read only memory (ROM), random access memory (RAM), as well as other physical media capable of data storage. For example, data storage may include random access memory (RAM) and read only memory (ROM), which may be configured to access and store data and information and computer program instructions. Data storage may also include storage media or other suitable type of memory (e.g., such as, for example, RAM, ROM, programmable read-only memory (PROM), erasable programmable read-only memory (EPROM), electrically erasable programmable read-only memory (EEPROM), magnetic disks, optical disks, floppy disks, hard disks, removable cartridges, flash drives, and any type of tangible and non-transitory storage medium), where the files that comprise an operating system, application programs including, for example, web browser application, email application and/or other applications, and data files may be stored. The data storage of the network-enabled computer systems may include electronic information, files, and documents stored in various ways, including, for example, a flat file, indexed file, hierarchical database, relational database, such as a database created and maintained with software from, for example, Oracle^{®} Corporation, Microsoft^{®} Excel file, Microsoft^{®} Access file, a solid state storage device, which may include a flash array, a hybrid array, or a server-side product, enterprise storage, which may include online or cloud storage, or any other storage mechanism. Moreover, the figures illustrate various components (e.g., servers, computers, processors, etc.) separately. The functions described as being performed at various components may be performed at other components, and the various components may be combined or separated. Other modifications also may be made.

Computer readable program instructions described herein can be downloaded to respective computing and/or processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing and/or processing device receives computer readable program instructions from the network and forwards the computer readable program instructions for storage in a computer readable storage medium within the respective computing and/or processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, to perform aspects of the present invention.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions specified herein. These computer-readable program instructions may also be stored in a computer-readable storage medium that can direct a computer, a programmable data processing apparatus, and/or other devices to function in a manner, such that the computer readable storage medium having instructions stored therein comprises an article of manufacture including instructions which implement aspects of the functions specified herein.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions specified herein.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application specific integrated circuit).

Throughout the disclosure, the following terms take at least the meanings explicitly associated herein, unless the context clearly dictates otherwise. The term "or" is intended to mean an inclusive "or." Further, the terms "a," "an," and "the" are intended to mean one or more unless specified otherwise or clear from the context to be directed to a singular form.

In this description, numerous specific details have been set forth. It is to be understood, however, that implementations of the disclosed technology may be practiced without these specific details. In other instances, well-known methods, structures and techniques have not been shown in detail in order not to obscure an understanding of this description. References to "some examples," "other examples," "one example," "an example," "various examples," "one embodiment," "an embodiment," "some embodiments," "example embodiment," "various embodiments," "one implementation," "an implementation," "example implementation," "various implementations," "some implementations," etc., indicate that the implementation(s) of the disclosed technology so described may include a particular feature, structure, or characteristic, but not every implementation necessarily includes the particular feature, structure, or characteristic. Further, repeated use of the phrases "in one example," "in one embodiment," or "in one implementation" does not necessarily refer to the same example, embodiment, or implementation, although it may.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

While certain implementations of the disclosed technology have been described in connection with what is presently considered to be the most practical and various implementations, it is to be understood that the disclosed technology is not to be limited to the disclosed implementations, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain implementations of the disclosed technology, including the best mode, and also to enable any person skilled in the art to practice certain implementations of the disclosed technology, including making and using any devices or systems and performing any incorporated methods. The patentable scope of certain implementations of the disclosed technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for deriving a card verification code (CVC) of a payment card, comprising:
receiving, by a server, a request of issuing a payment card to a user;
determining, by the server, a personal account number (PAN) and an expiry date of the payment card;
receiving, by the server, a social security number (SSN) and a zip code associated with the user;
generating, by the server, a dynamic service code based on the SSN and the zip code;
generating, by the server, a bitmap based on the PAN, the expiry date, and the dynamic service code;
receiving, by the server, an encryption key; and
generating, by the server, a CVC of the payment card based on the bitmap and the encryption key.

2. The method according to claim 1, further comprising storing, by the server, the CVC in the payment card.

3. The method according to claim 1 or 2, further comprising:
receiving, by the server, a customer reference number associated with the user; and
generating, by the server, the CVC of the payment card based on the customer reference number.

4. The method according to any one of the preceding claims, further comprising:
receiving, by the server, a PAN sequence number associated with the user; and
generating, by the server, the CVC of the payment card based on the PAN sequence number.

5. The method according to any one of the preceding claims, further comprising:
receiving, by the server, an account reference number associated with the user; and
generating, by the server, the CVC of the payment card based on the account reference number.

6. The method according to any one of the preceding claims, further comprising:
receiving, by the server, a personal identification number (PIN) associated with the user; and
generating, by the server, the CVC of the payment card based on the PIN.

7. The method according to any one of the preceding claims, further comprising:
receiving, by the server, a taxpayer identification number (TIN) associated with the user; and
generating, by the server, the dynamic service code based on the TIN.

8. The method according to any one of the preceding claims, wherein the bitmap is generated by the server using a random number generator.

9. The method according to any one of the preceding claims, wherein the dynamic service code comprises:
(a) one digit from a data field of the SSN and two digits from a data field of the zip code; or
(b) two digits from a data field of the SSN and one digit from a data field of the zip code.

10. The method according to any one of the preceding claims, further comprising storing, by the server, the bitmap and the dynamic service code in a database.

11. The method according to claim 10, further comprising:
receiving, by the server from a point of sale (POS) terminal, the PAN, the expiry date, and a CVC;
retrieving, by the server from the database, the bitmap and the dynamic service code;
regenerating, by the server, a CVC based on the PAN, the expiry date, the bitmap and the dynamic service code;
comparing, by the server, the received CVC and the regenerated CVC; and
authorizing, by the server, the payment card based on the comparison.

12. The method of any one of the preceding claims, wherein the CVC is generated by the server using triple-DES encryption with double length keys.

13. A system for deriving a card verification code (CVC) of a payment card, comprising:
a server, the server configured to carry out the method of any one of the preceding claims.

14. The system according to claim 13, wherein the server comprises one or both of:
(a) a hardware secure module (HSM) configured to generate the CVC;
(b) a key management system configured to store the encryption key.

15. A computer program that, when executed on a computer arrangement, causes the computer arrangement to perform the method of any one of claims 1 to 12.
